# FASCICULE DE BREVET EUROPEEN

(11) **EP 2 635 488 B1**
(45) Date de publication et mention de la délivrance du brevet: **15.10.2014**
(21) Numéro de dépôt: 11770433.8
(22) Date de dépôt: 17.10.2011
(51) Int. Cl.: B63B 35/32, E02B 15/04

(54) **NAVIRE COMPRENANT UN DISPOSITIF DE NETTOYAGE ET UN DISPOSITIF DE GUIDAGE DE MATERIAUX FLOTTANTS TELS QUE DES HYDROCARBURES**
SCHIFF MIT EINER REINIGUNGSVORRICHTUNG SOWIE EINER VORRICHTUNG ZU FÜHRUNG SCHWIMMENDEN MATERIALIEN WIE KOHLENWASSERSTOFFEN
SHIP WITH A CLEANING DEVICE AND A DEVICE FOR CONVEYING FLOATING MATERIAL SUCH AS HYDROCARBONS

(30) Priorité: 20.10.2010 FR 1058576
(43) Date de publication de la demande: 11.09.2013
(73) Titulaire: Ecoceane, 75004 Paris (FR)
(72) Inventeur: GASTALDI, Robert, F-92150 Suresnes (FR)
(74) Mandataire: Maillet, Alain
(86) Numéro de dépôt international: PCT/EP2011/068061
(87) Numéro de publication internationale: WO 2012/052378

(56) Documents cités:
- FR-A1- 2 490 260
- US-A- 4 033 876
- US-A1- 2006 065 586

## Description

La présente invention concerne un navire équipé d'un dispositif de guidage d'objets flottants sur l'eau, ainsi qu'un tel dispositif de guidage.

On connaît un dispositif de guidage d'objets flottants qui prend la forme de deux boudins gonflables qui sont fixés à l'avant d'un navire et s'étendent en amont de celui-ci en s'écartant afin de balayer une plus grande surface de l'eau. De tels boudins forment ainsi un entonnoir qui dirige l'eau et les objets flottants vers l'avant du navire où un dispositif de nettoyage est prévu.

Un tel dispositif de guidage ne donne pas entière satisfaction car de tels boudins réduisent la manoeuvrabilité du navire.

En outre, il est souvent long à mettre en oeuvre et lorsqu'il y a de la houle, les boudins ont souvent des difficultés à suivre le mouvement de la houle, et il peut alors arriver que les boudins décollent de la surface de l'eau et que des objets flottants et en particulier des hydrocarbures passent sous les boudins.

Le document FR 2 490 260 est considéré comme étant l'état de la technique le plus proche et décrit un dispositif de récuperation de produits polluants de la mer, avec deux bras flottants en "V". Un objet de la présente invention est de proposer un navire équipé d'un dispositif de guidage d'objets flottants sur l'eau tels que des hydrocarbures qui ne présente pas les inconvénients de l'art antérieur et qui en particulier soit facile à manoeuvrer.

A cet effet, est proposé un navire comprenant un dispositif de nettoyage et un dispositif de guidage d'objets flottants tels que des hydrocarbures, le dispositif de guidage étant monté sur le navire et comportant :
- deux rampes flottantes distantes l'une de l'autre, et
- pour chaque rampe, un dispositif de manoeuvre monté sur la coque du navire, et sur lequel est montée ladite rampe, et qui est destiné à faire passer ladite rampe d'une position de rangement dans laquelle ladite rampe est rangée sur le navire, à une position intermédiaire dans laquelle ladite rampe est fixe devant le navire et maintenue au-dessus de l'eau, et à une position de récupération dans laquelle ladite rampe flotte dans l'eau en amont du navire de manière à guider les objets flottants vers ledit dispositif de nettoyage, les deux rampes s'écartant l'une de l'autre en progressant depuis l'arrière des rampes vers l'avant des rampes dans la position de récupération. Avantageusement, chaque rampe est libre en rotation par rapport audit dispositif de manoeuvre autour d'un axe de plongée.

Selon un mode de réalisation particulier, chaque dispositif de manoeuvre comporte:
- un bras de levage monté sur la coque du navire et libre en rotation autour d'un premier axe de rotation parallèle à l'axe de plongée, le bras de levage venant en position de rangement se placer contre la face supérieure de la rampe correspondante,
- un bras de blocage monté sur ledit bras de levage et libre en rotation autour d'un deuxième axe de rotation parallèle à l'axe de plongée, le bras de blocage venant en position de rangement se placer contre la face inférieure de la rampe correspondante, la rampe correspondante étant montée libre en rotation sur ledit bras de blocage,
- un premier moyen d'actionnement destiné à entraîner en rotation ledit bras de levage,
- un deuxième moyen d'actionnement destiné à entraîner en rotation le bras de blocage, et
- une unité de commande destinée à commander chaque moyen d'actionnement.

Avantageusement, le navire comporte, pour chaque bras de blocage, un moyen de verrouillage destiné à verrouiller ledit bras de blocage au navire lorsque la rampe correspondante est en position de récupération.

Selon un mode de réalisation particulier, chaque dispositif de manoeuvre comporte:
- un bras de levier monté sur la coque du navire et libre en rotation autour d'un premier axe de rotation parallèle à l'axe de plongée, la rampe correspondante étant montée libre en rotation sur ledit bras de levier,
- un premier moyen d'actionnement destiné à entraîner en rotation ledit bras de levier,
- un deuxième moyen d'actionnement destiné à entraîner en rotation la rampe correspondante, et
- une unité de commande destinée à commander chaque moyen d'actionnement.

Avantageusement, pour chaque bras de levier, le navire comporte un moyen de verrouillage destiné à verrouiller ledit bras de levier au navire lorsque la rampe correspondante est en position de récupération.

Avantageusement, chaque rampe est un élément rigide.

Avantageusement, chaque rampe est constituée d'une pluralité de segments rigides, chacun étant relié à son/ses voisins par une/deux liaisons pivot autour d'un axe parallèle à l'axe de plongée, et par un moyen de blocage qui est laissé libre afin d'assurer le mouvement de chaque segment et qui est bloqué pour bloquer la liaison pivot correspondante.

Avantageusement, en position de récupération, la ligne de flottaison de chaque rampe se situe à mi-hauteur de ladite rampe.

Avantageusement, un actionneur d'écartement est disposé entre les deux rampes.

Avantageusement, les deux rampes forment ensemble un élément monobloc.

Avantageusement, dans la position de rangement, les deux rampes sont déposées sur le pont du navire.

Avantageusement, dans la position de rangement, les deux rampes sont stockées le long des bordés du navire.

L'invention propose également un dispositif de guidage d'objets flottants tels que des hydrocarbures pour un navire selon l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
- les Figs 1 à 5 montrent un navire équipé d'un dispositif de guidage selon un premier mode de réalisation de l'invention lors des différentes étapes de mise en oeuvre de celui-ci,
- les Figs. 6 à 10 montrent un navire équipé d'un dispositif de guidage selon un deuxième mode de réalisation de l'invention lors des différentes étapes de mise en oeuvre de celui-ci,
- la Fig. 11 montre une variante de l'invention, et
- la Fig. 12 montre une rampe selon un mode de réalisation particulier.

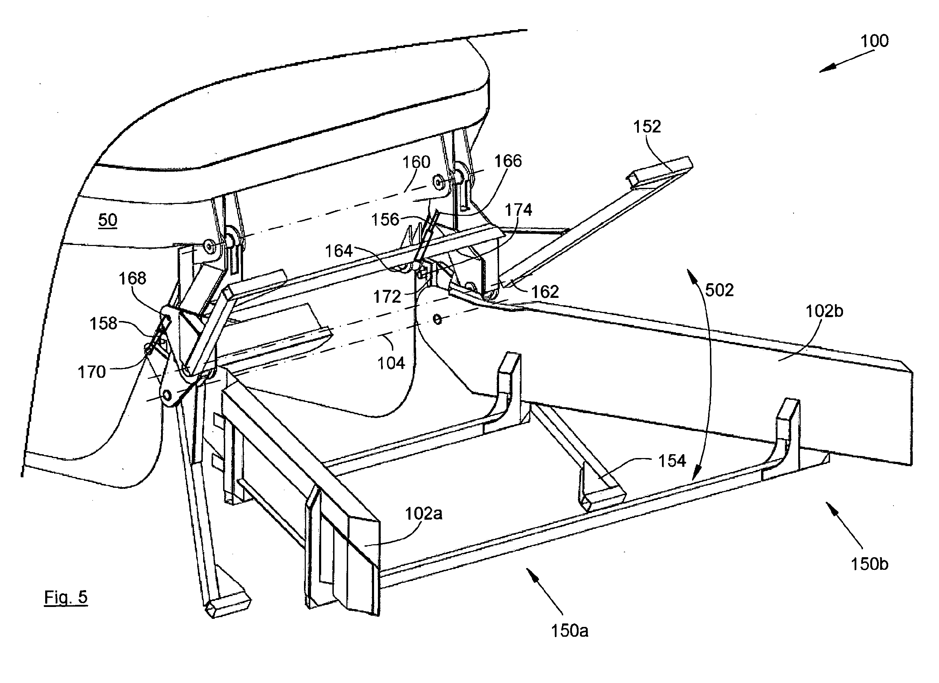

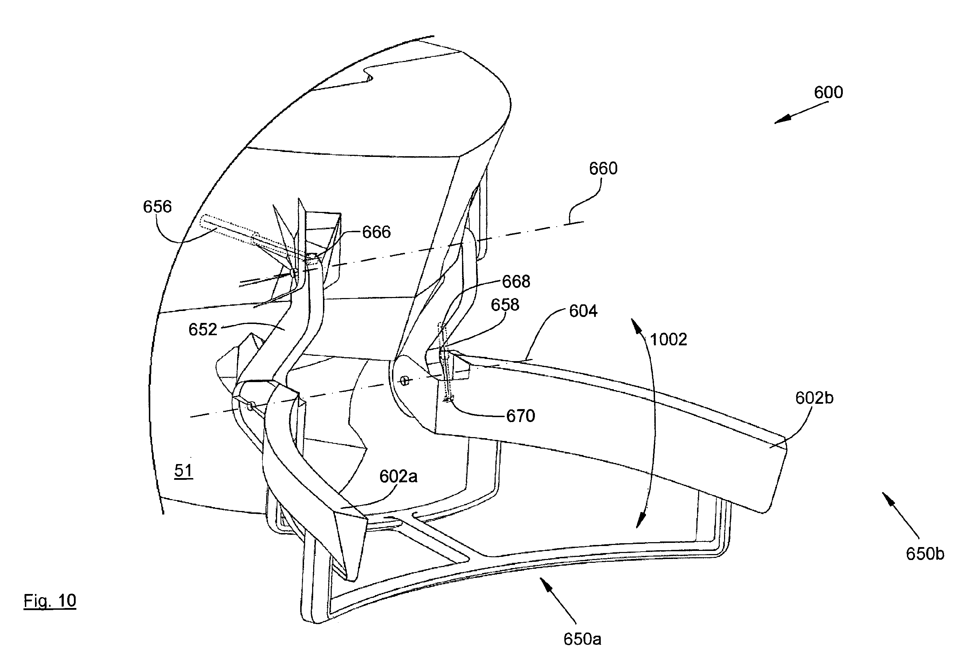

Dans la description qui suit, les termes relatifs à une position sont pris en référence à un navire naviguant sur l'eau avec le dispositif de guidage déployé tel qu'il est représenté sur la Fig. 5 ou sur la Fig. 10. Les directions amont et aval sont prises en référence par rapport à la direction de déplacement du navire lorsqu'il se déplace en marche avant.

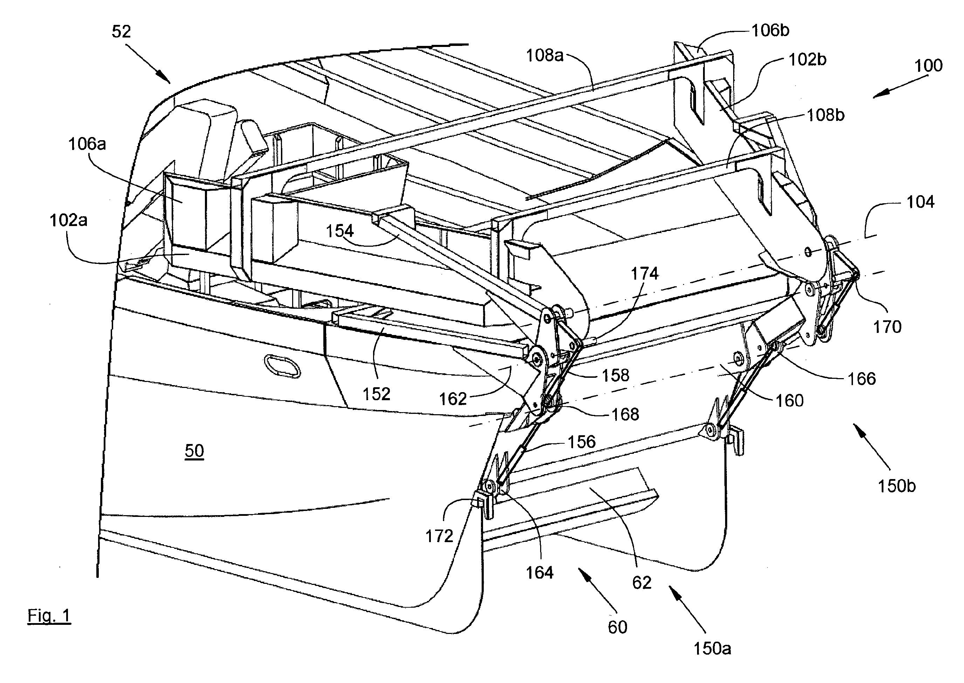

La Fig. 1 montre un dispositif de guidage 100 selon un premier mode de réalisation de l'invention qui est destiné à guider des objets flottants sur l'eau tels que des hydrocarbures. Le dispositif de guidage 100 est monté sur un navire 50 qui flotte sur l'eau à la surface de laquelle flottent également des objets flottants tels que des hydrocarbures.

Le dispositif de guidage 100 comporte:
- deux rampes 102a et 102b flottantes sont distantes l'une de l'autre, et
- pour chaque rampe 102a, 102b, un dispositif de manoeuvre 150a, 150b qui est monté sur le navire 50, et sur lequel est montée ladite rampe 102a, 102b, et qui est destiné à faire passer ladite rampe 102a, 102b d'une position de rangement dans laquelle elle est rangée sur le navire 50, à une position intermédiaire dans laquelle elle est fixe devant le navire 50 et maintenue au-dessus de l'eau, et à une position de récupération dans laquelle elle flotte dans l'eau en amont du navire 50.

En position de récupération, les deux rampes 102a et 102b s'écartent l'une de l'autre en progressant depuis l'arrière des rampes 102a et 102b vers l'avant des rampes 102a et 102b afin de former un entonnoir qui guide les objets flottants vers l'avant du navire 50 lorsque celui-ci avance.

Lorsque les rampes 102a et 102b sont dans la position intermédiaire, le navire 50 peut être facilement manoeuvre et selon les cas les rampes 102a et 102b peuvent être rapidement plongées à nouveau dans l'eau ou être complètement relevées pour être rangées.

Chaque rampe 102a, 102b est libre en rotation par rapport au dispositif de manoeuvre 150a, 150b correspondant autour d'un axe de plongée 104 sensiblement horizontal et perpendiculaire au sens d'avancement du navire 50.

Du fait de la liberté de rotation des rampes 102a et 102b autour de l'axe de plongée 104, les rampes 102a et 102b suivent le mouvement de la houle comme cela est représenté par la double flèche 502 de la Fig. 5. En suivant le mouvement de la houle, les rampes 102a et 102b empêchent les fuites d'objets flottants et améliorent ainsi la récupération.

Chaque rampe 102a, 102b comporte une face intérieure qui s'étend verticalement pour définir l'entonnoir et qui sert à guider les objets flottants.

La Fig. 1 montre la position de rangement.

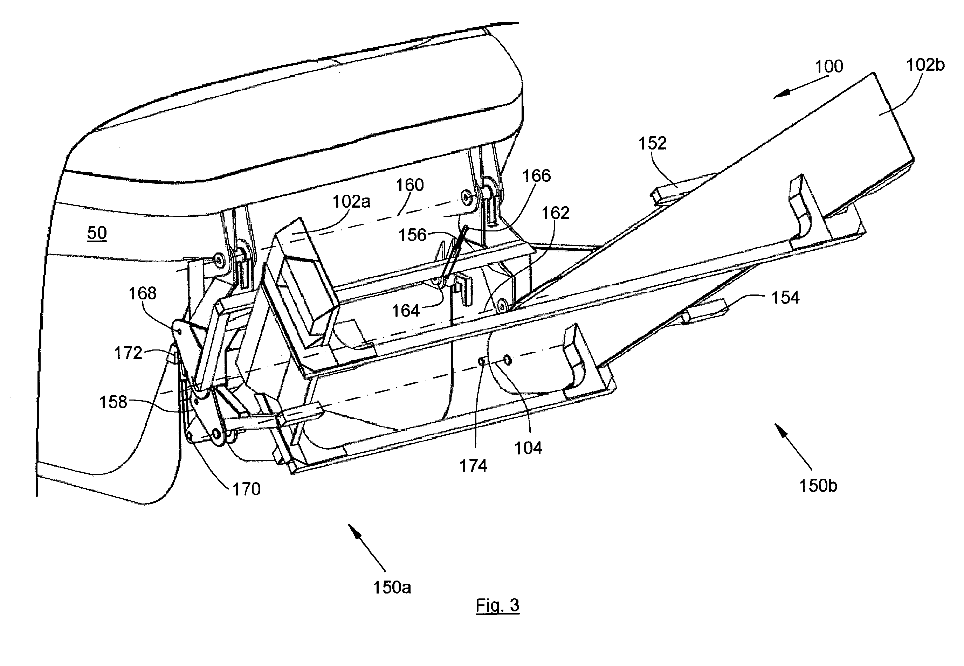

La Fig. 3 montre la position intermédiaire.

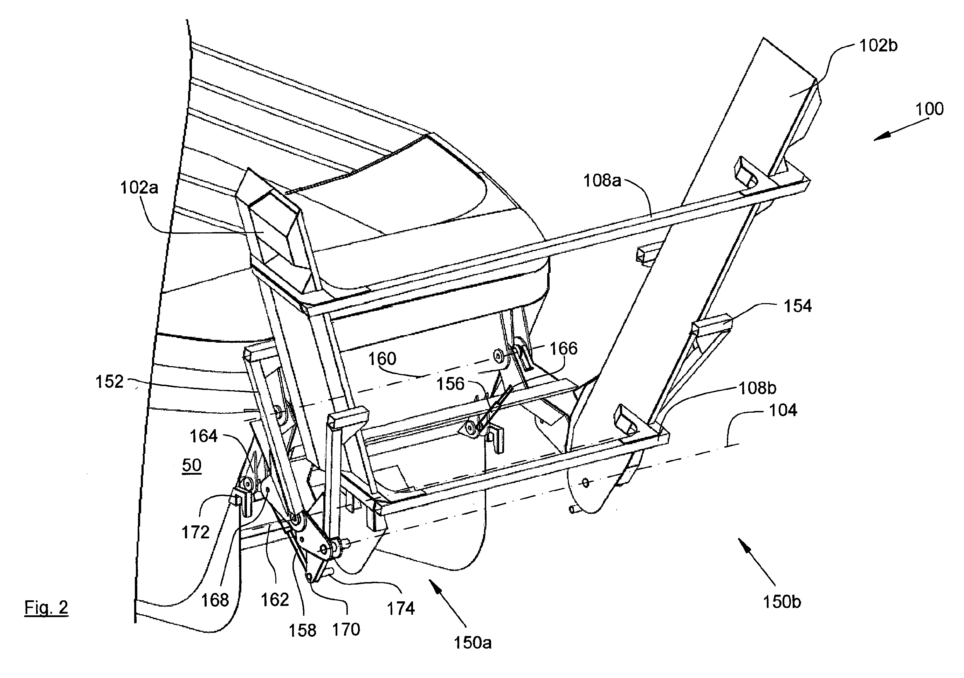

La Fig. 2 montre une première position de déploiement entre la position de rangement et la position intermédiaire.

La Fig. 5 montre la position de récupération.

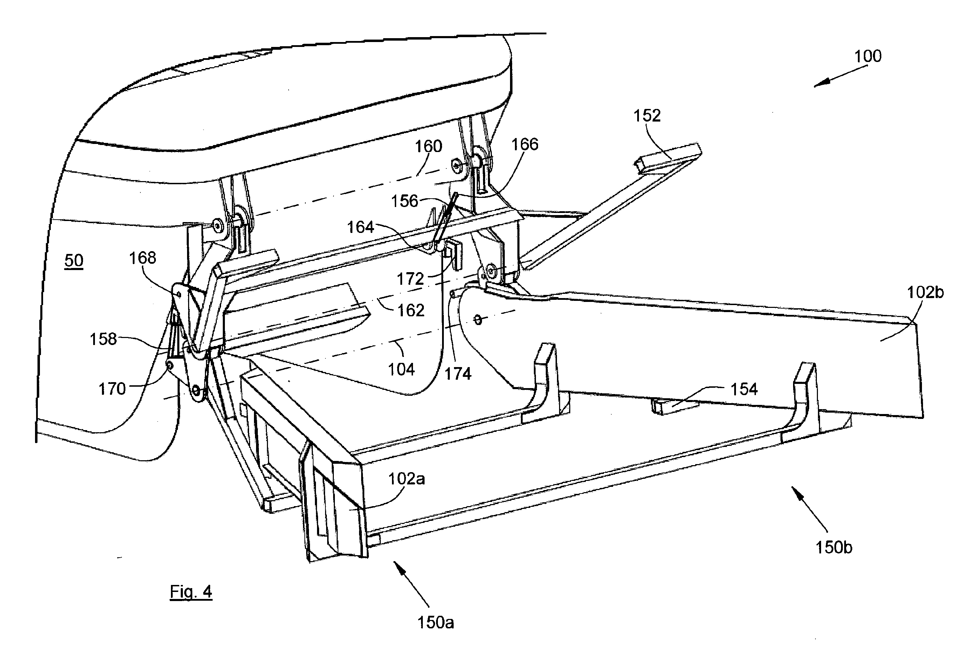

La Fig. 4 montre une deuxième position de déploiement entre la position intermédiaire et la position de récupération.

Dans le mode de réalisation de l'invention présenté ici, la position de rangement correspond à une position dans laquelle les deux rampes 102a et 102b sont déposées sur le pont 52 du navire 50, mais il est également possible de prévoir que dans la position de rangement les deux rampes 102a et 102b sont stockées le long des bordés du navire 50 en épousant leur forme et libérant ainsi le pont 52.

Le navire 50 présente également un dispositif de nettoyage 60 qui s'étend à partir de l'avant du navire 50 et à l'intérieur de celui-ci et qui permet de récupérer les objets flottants. Pour ce dispositif de nettoyage 60, seule l'entrée 62 est représentée. Le dispositif de nettoyage 60 peut prendre différentes formes.

Lorsqu'elles sont en position de récupération, les rampes 102a et 102b sont prévues pour guider les objets flottants vers l'entrée 62 du dispositif de nettoyage 60.

Les rampes 102a et 102b sont des éléments rigides et sont constituées dans le mode de réalisation de l'invention présenté ici d'éléments en aluminium qui sont conformés pour flotter. Par exemple, des caissons creux 106a et 106b sont prévus sur chaque rampe 102a, 102b pour assurer la flottabilité.

Les deux rampes 102a et 102b sont ici solidaires l'une de l'autre et forment ensemble un élément monobloc. La solidarité est assurée ici par deux poutres 108a et 108b qui s'étendent entre les deux rampes 102a et 102b et dont chaque extrémité est fixée à l'une des rampes 102a et 102b.

Seul le dispositif de manoeuvre 150a disposé à tribord et son fonctionnement vont maintenant être décrits mais le dispositif de manoeuvre 150b disposé à bâbord est identique et son fonctionnement aussi.

Le dispositif de manoeuvre 150a comporte:
- un bras de levage 152 monté sur le navire 50 et libre en rotation autour d'un premier axe de rotation 160 parallèle à l'axe de plongée 104, le bras de levage 152 venant en position de rangement se placer contre la face supérieure de la rampe 102a, c'est-à-dire la face qui se trouve en vis-à-vis du pont 52,
- un bras de blocage 154 monté sur le bras de levage 152 et libre en rotation autour d'un deuxième axe de rotation 162 parallèle à l'axe de plongée 104, le bras de blocage 154 venant en position de rangement se placer contre la face inférieure de la rampe 102a, c'est-à-dire la face qui est opposée au pont 52, la rampe 102a étant montée libre en rotation sur ledit bras de blocage 154 autour de l'axe de plongée 104,
- un premier moyen d'actionnement 156 destiné à entraîner en rotation le bras de levage 152 autour du premier axe de rotation 160,
- un deuxième moyen d'actionnement 158 destiné à entraîner en rotation le bras de blocage 154 autour du deuxième axe de rotation 162, et
- une unité de commande actionnable par un technicien depuis le navire 50 et destinée à commander chaque moyen d'actionnement 156, 158.

Dans le mode de réalisation de l'invention présenté sur les Figs., chaque moyen d'actionnement 156, 158 prend la forme d'un vérin hydraulique.

Le premier moyen d'actionnement 156 est fixé entre une chape 164 du navire 50 et une chape 166 du bras de levage 152. Les positionnements des chapes 164 et 166 sont tels que l'extension et la compression du premier moyen d'actionnement 156 entraînent la rotation du bras de levage 152 autour du premier axe de rotation 160.

Le deuxième moyen d'actionnement 158 est fixé entre une chape 168 du bras de levage 152 et une chape 170 du bras de blocage 154. Les positionnements des chapes 168 et 170 sont tels que l'extension et la compression du deuxième moyen d'actionnement 158 entraînent la rotation du bras de blocage 154 autour du deuxième axe de rotation 162 qui se déplace en même temps que le bras de levage 152.

La Fig. 2 montre que la compression du premier moyen d'actionnement 156 entraîne la rotation du bras de levage 152 qui soulève alors la rampe 102a et l'entraîne en rotation.

Pendant ce temps, le deuxième moyen d'actionnement 158 n'est pas actionné, ce qui permet de maintenir la rampe 102a entre le bras de levage 152 et le bras de blocage 154.

La Fig. 3 montre la position intermédiaire qui est atteinte lorsque le premier moyen d'actionnement 156 a réalisé son déplacement complet. Cette position intermédiaire permet de maintenir les rampes 102a et 102b au-dessus de l'eau, ce qui augmente la manoeuvrabilité du navire 50, puisque les rampes 102a et 102b ne sont pas dans l'eau.

La Fig. 4 montre que la compression du deuxième moyen d'actionnement 158 entraîne la rotation du bras de blocage 154 qui se baisse, entraînant alors l'abaissement de la rampe 102a qui se décolle du bras de levage 152 qui reste dans la position correspondante à la position intermédiaire car le premier moyen d'actionnement 156 n'est plus actionné.

La Fig. 5 montre la position de récupération qui est atteinte lorsque le deuxième moyen d'actionnement 158 a réalisé son déplacement complet. Dans cette position de récupération, le bras de blocage 154 n'est plus en contact avec la rampe 102a et il s'enfonce sous l'eau. La rampe 102a n'est alors plus soumise ni au bras de levage 152, ni au bras de blocage 154 et elle plonge dans l'eau, où elle flotte. Les objets flottants sont alors guidés vers l'entrée 62 du dispositif de nettoyage 60.

Dans le mode de réalisation décrit, la hauteur d'une rampe 102a, 102b est de l'ordre de 90 cms.

Les rampes 102a et 102b sont réalisées de manière à ce que leurs lignes de flottaison se situent sensiblement à mi-hauteur, c'est-à-dire que les rampes 102a et 102b plongent dans l'eau sur une demi-hauteur et se trouvent hors de l'eau sur une autre demi-hauteur. L'axe de plongée 104 se trouve également sensiblement au niveau de la ligne de flottaison des rampes 102a et 102b.

Lorsque le bras de blocage 154 est en position maximale et que la rampe 102a est en position de récupération, la rampe 102a est soumise à des efforts importants du fait de l'avancement du navire 50. Pour limiter, voire annuler, l'impact de ces efforts, un moyen de verrouillage 172 est prévu sur le navire 50.

Le moyen de verrouillage 172 vient bloquer le bras de blocage 154 en le verrouillant au navire 50, laissant la rampe 102a libre de ses mouvements.

Dans le mode de réalisation de l'invention présenté ici, le moyen de verrouillage 172 prend la forme d'un crochet en U ouvert vers le bas et qui est destiné à recevoir un plot de verrouillage 174 du bras de blocage 154 qui s'introduit dans le crochet en U 172 à la fin de la rotation du bras de blocage 154.

La remontée de la rampe 102a s'effectue en sens inverse. Le deuxième moyen d'actionnement 158 est actionné de manière à amener le bras de blocage 154 en contact avec la face inférieure de la rampe 102a, l'actionnement du deuxième moyen d'actionnement 158 et donc le déplacement du bras de blocage 154 sont poursuivis pour soulever la rampe 102a dans la position intermédiaire.

Le relevage complet est obtenu par l'actionnement du premier moyen d'actionnement 156 qui entraîne la rotation du bras de levage 152 et du bras de blocage 154 qui continue à soulever la rampe 102a jusqu'à ce qu'elle revienne en position de rangement.

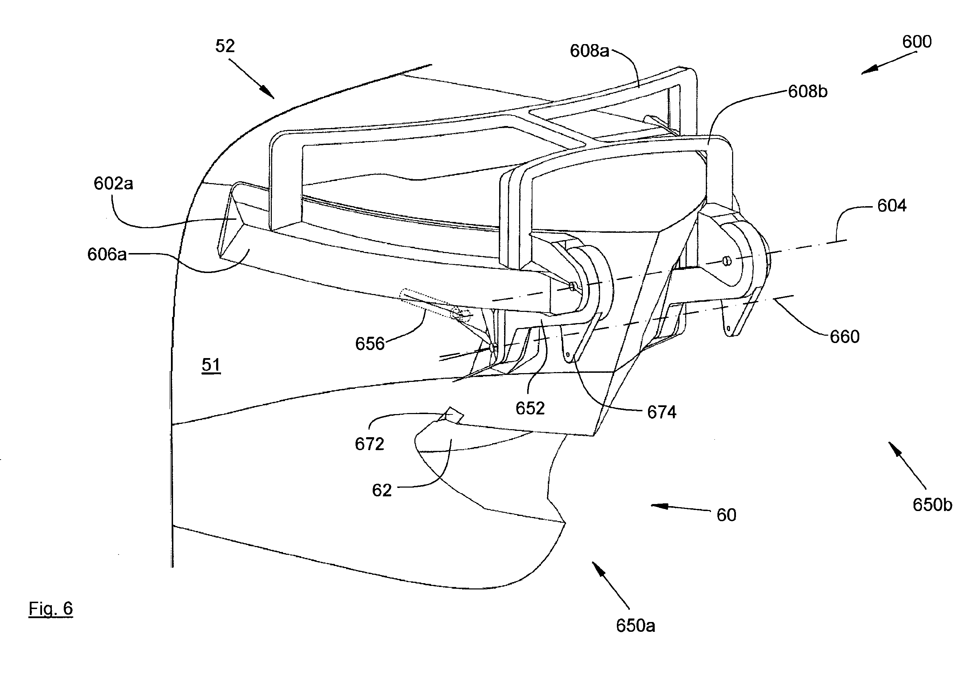

La Fig. 6 montre un dispositif de guidage 600 selon un deuxième mode de réalisation de l'invention. Le dispositif de guidage 600 est destiné à guider des objets flottants sur l'eau tels que des hydrocarbures et il est monté sur un navire 51 qui comporte également un dispositif de nettoyage 60 dont seule l'entrée 62 est représentée.

Le dispositif de guidage 600 prend sensiblement la même forme que celui du premier mode de réalisation de l'invention puisqu'il comporte:
- deux rampes 602a et 602b flottantes et distantes l'une de l'autre, et
- pour chaque rampe 602a, 602b, un dispositif de manoeuvre 650a, 650b qui est monté sur le navire 51, et sur lequel est montée ladite rampe 602a, 602b, et qui est destiné à faire passer ladite rampe 602a, 602b d'une position de rangement dans laquelle elle est rangée sur le navire 51, à une position intermédiaire dans laquelle elle est fixe devant le navire 51 et maintenue au-dessus de l'eau, et à une position de récupération dans laquelle elle flotte dans l'eau en amont du navire 51.

En position de récupération, les deux rampes 602a et 602b forment également un entonnoir à l'avant du navire 51 pour guider les objets flottants vers l'entrée 62 du dispositif de nettoyage 60.

Chaque rampe 602a, 602b est libre en rotation par rapport au dispositif de manoeuvre 650a, 650b correspondant autour d'un axe de plongée 604 sensiblement horizontal et perpendiculaire au sens d'avancement du navire 51, permettant ainsi aux rampes 602a et 602b de suivre le mouvement de la houle comme cela est représenté par la double flèche 1002 de la Fig. 10.

La Fig. 6 montre la position de rangement.

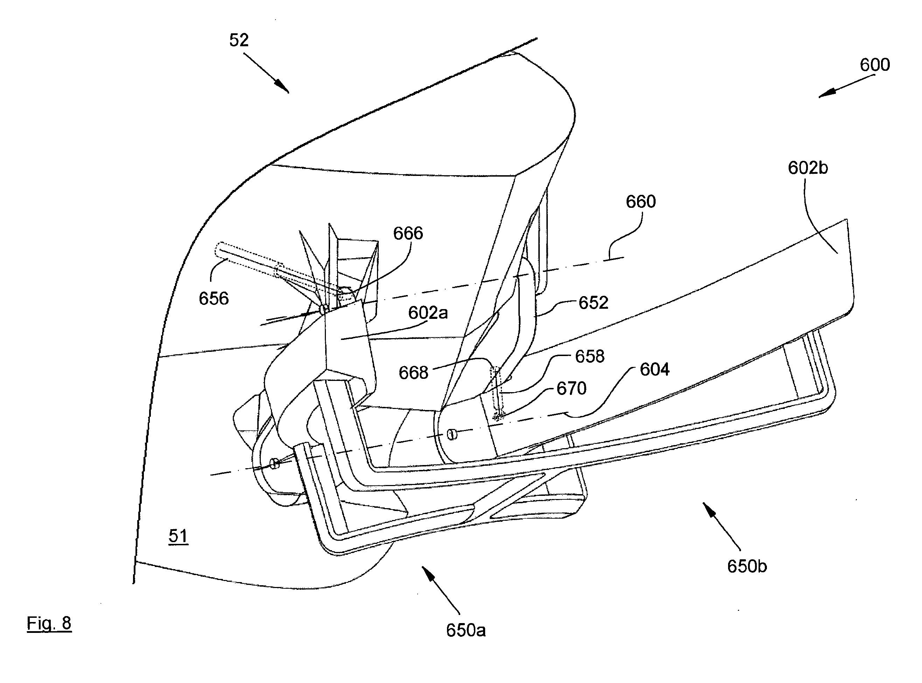

La Fig. 8 montre la position intermédiaire.

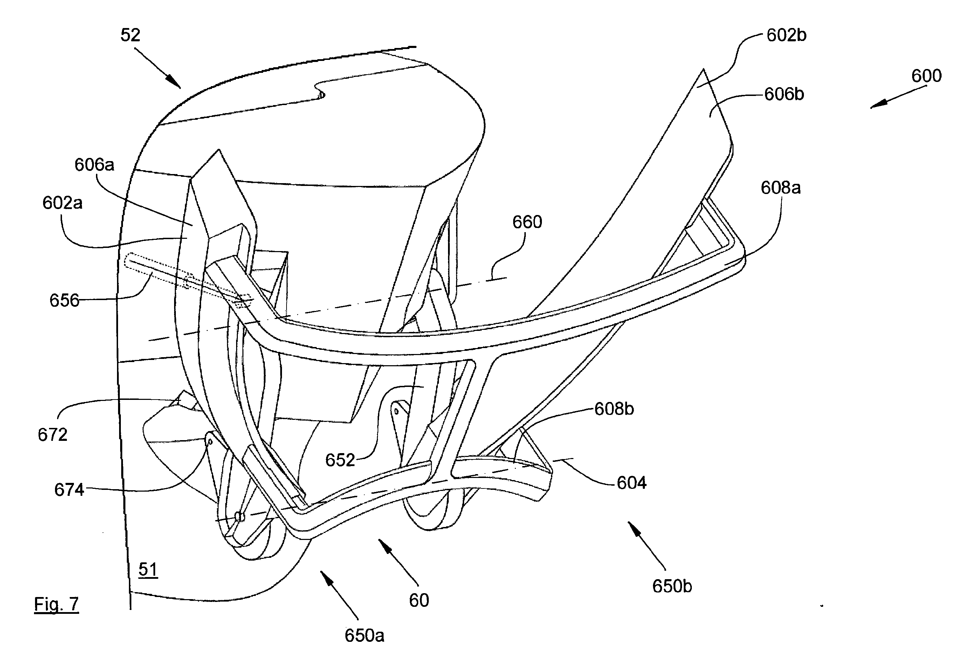

La Fig. 7 montre une première position de déploiement entre la position de rangement et la position intermédiaire.

La Fig. 10 montre la position de récupération.

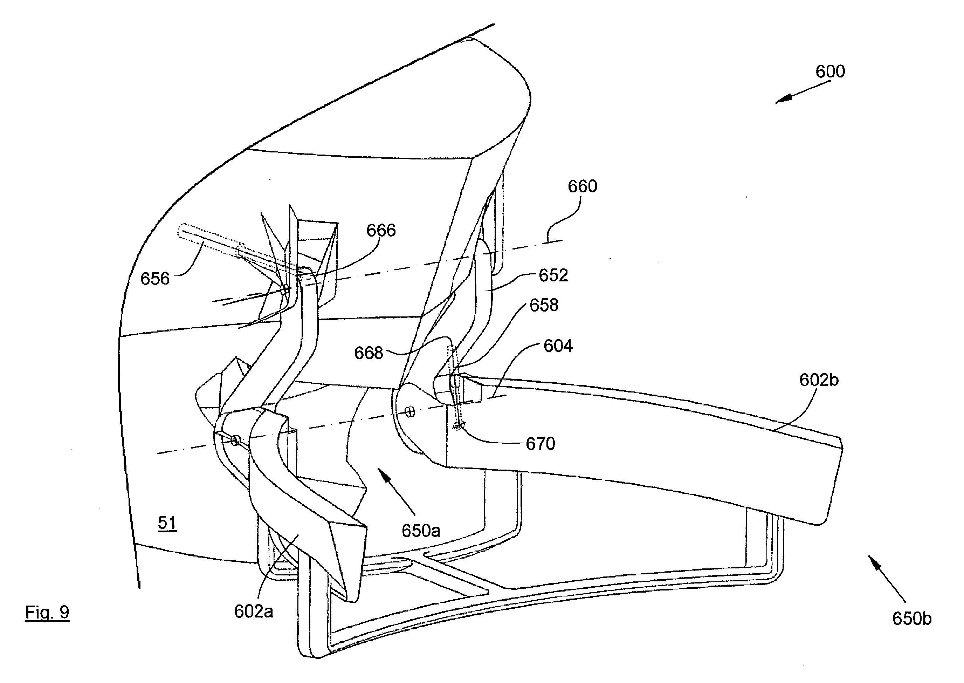

La Fig. 9 montre une deuxième position de déploiement entre la position intermédiaire et la position de récupération.

Dans le mode de réalisation de l'invention présenté ici, la position de rangement correspond à une position dans laquelle les deux rampes 602a et 602b sont stockées le long des bordés du navire 51 en épousant leur forme et libérant ainsi le pont 52.

Les rampes 602a et 602b sont des éléments rigides qui sont également réalisés pour flotter en prenant la forme de caissons creux 606a et 606b.

Les deux rampes 602a et 602b sont solidaires l'une de l'autre et forment ensemble un élément monobloc. La solidarité est assurée ici par deux poutres 608a et 608b.

Seul le dispositif de manoeuvre 650a disposé à tribord et son fonctionnement vont maintenant être décrits mais le dispositif de manoeuvre 650b disposé à bâbord est identique et son fonctionnement aussi.

Le dispositif de manoeuvre 650a comporte:
- un bras de levier 652 monté sur la coque du navire 51 et libre en rotation autour d'un premier axe de rotation 660 parallèle à l'axe de plongée 604, la rampe 602a correspondante étant montée libre en rotation sur le bras de levier 652 à son extrémité libre,
- un premier moyen d'actionnement 656 destiné à entraîner en rotation le bras de levier 652 autour du premier axe de rotation 660,
- un deuxième moyen d'actionnement 658 destiné à entraîner en rotation la rampe 602a autour de l'axe de plongée 604, et
- une unité de commande actionnable par un technicien depuis le navire 51 et destinée à commander chaque moyen d'actionnement 656, 658.

Dans le mode de réalisation de l'invention présenté sur les Figs., chaque moyen d'actionnement 656, 658 prend la forme d'un vérin hydraulique.

Le premier moyen d'actionnement 656 est fixé entre une chape du navire 51 et une chape 666 du bras de levier 652. Les positionnements des chapes 666 sont tels que l'extension et la compression du premier moyen d'actionnement 656 entraînent la rotation du bras de levier 652 autour du premier axe de rotation 660.

Le deuxième moyen d'actionnement 658 est fixé entre une chape 668 du bras de levier 652 et une chape 670 de la rampe 602a. Les positionnements des chapes 668 et 670 sont tels que l'extension et la compression du deuxième moyen d'actionnement 658 entraînent la rotation de la rampe 602a autour de l'axe de plongée 604 qui se déplace en même temps que le bras de levier 652.

La Fig. 7 montre que l'extension du premier moyen d'actionnement 56 entraîne la rotation du bras de levier 652 qui entraîne alors la rampe 602a en rotation.

Pendant ce temps, le deuxième moyen d'actionnement 658 n'est pas actionné, ce qui permet de maintenir la rampe 602a par rapport au bras de levier 652.

La Fig. 8 montre la position intermédiaire qui est atteinte lorsque le premier moyen d'actionnement 656 a réalisé son déplacement complet. Cette position intermédiaire permet de maintenir les rampes 602a et 602b au-dessus de l'eau, ce qui augmente la manoeuvrabilité du navire 51.

La Fig. 9 montre que l'extension du deuxième moyen d'actionnement 658 entraîne la rotation de la rampe 602a qui se baisse.

La Fig. 10 montre la position de récupération qui est atteinte lorsque le deuxième moyen d'actionnement 658 a réalisé son déplacement complet. Dans cette position de récupération, le deuxième moyen d'actionnement 658 est rendu libre, c'est-à-dire qu'il n'est plus soumis à une consigne et est libre de se déplacer sous l'action de la rampe 602a libre de ses mouvements.

Dans le cas d'un vérin hydraulique, cet état libre est obtenu en bouclant le vérin sur lui-même, c'est-à-dire en reliant hydrauliquement les deux chambres du vérin.

Comme pour le premier mode de réalisation de l'invention, les rampes 602a et 602b sont réalisées de manière à ce que leurs lignes de flottaison se situent sensiblement à mi-hauteur et que l'axe de plongée 604 se trouve également sensiblement au niveau de la ligne de flottaison des rampes 602a et 602b.

Lorsque le bras de levier 652 est en position maximale et que la rampe 602a est en position de récupération, la rampe 602a est soumise à des efforts importants du fait de l'avancement du navire 51 ce qui peut détériorer la liaison pivot autour du premier axe de rotation 660. Pour limiter, voire annuler, l'impact de ces efforts, un moyen de verrouillage 672 est prévu sur le navire 51, prenant par exemple la forme de pions ou loquets hydrauliques logés dans le navire 51.

Le moyen de verrouillage 672 vient bloquer le bras de levier 652 en le verrouillant au navire 51.

Dans le mode de réalisation de l'invention présenté ici, le moyen de verrouillage 672 prend la forme d'un logement et qui est destiné à recevoir un ergot de verrouillage 674 du bras de levier 652 à la fin de la rotation du bras de levier 652.

La remontée de la rampe 602a s'effectue en sens inverse. Le deuxième moyen d'actionnement 658 est actionné de manière à soulever la rampe 602a, et la replacer en position intermédiaire.

Le relevage complet est obtenu par l'actionnement du premier moyen d'actionnement 656 qui entraîne la rotation du bras de levier 652 qui soulève la rampe 602a jusqu'à ce qu'elle revienne en position de rangement.

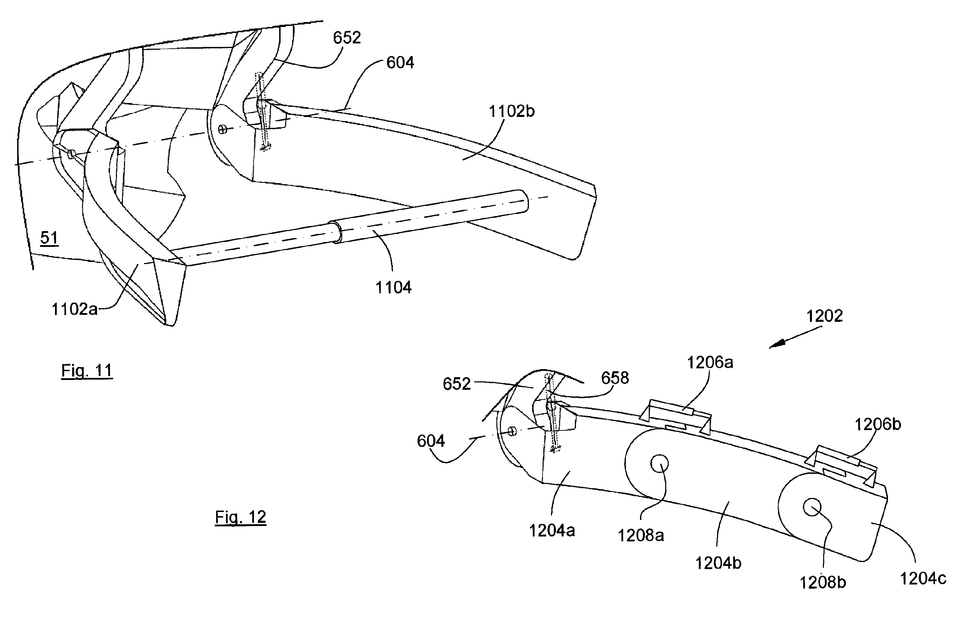

La Fig. 11 montre un navire dont les deux rampes 1102a et 1102b ne constituent pas un ensemble monobloc, mais sont indépendantes l'une de l'autre. Chacune peut alors suivre la houle indépendamment de l'autre.

Il est également possible de prévoir la mise en place d'un actionneur d'écartement 1104, par exemple du type vérin hydraulique entre les deux rampes 1102a et 1102b indépendantes, pour permettre de faire varier l'écartement entre les deux rampes 1102a et 1102b en modifiant la longueur de l'actionneur d'écartement 1104. A cette fin, la liaison pivot entre le bras de levier 652 et la rampe 1102a, 1102b correspondante pourra être remplacée par une liaison rotule. L'actionneur d'écartement 1104 est disposé à l'avant des rampes 1102a et 1102b.

Un tel agencement peut également être mis en place dans le cadre du premier mode de réalisation de l'invention, à savoir celui représenté sur les Figs. 1 à 5. La liaison rotule est alors entre le bras de blocage 154 et la rampe 1102a, 1102b correspondante.

La Fig. 12 montre une rampe 1202 qui est constituée d'une pluralité de segments rigides 1204a-c. Chaque segment 1204a-c est relié à son/ses voisins par une/deux liaisons pivot autour d'un axe parallèle 1208a, 1208b à l'axe de plongée. Un tel agencement permet de suivre des mouvements de houle très courts.

Pour rigidifier la rampe 1202, chaque liaison pivot entre deux segments 1204a-c est doublée d'un moyen de blocage 1206a, 1206b, par exemple un vérin hydraulique qui est laissé libre afin d'assurer le mouvement de chaque segment 1204a-c et qui est bloqué pour bloquer la liaison pivot correspondante. Un tel moyen de blocage prend par exemple la même forme que le deuxième moyen d'actionnement 658 et se positionne entre les deux segments associés. Chaque extrémité d'un moyen de blocage 1206a, 1206b est fixé sur l'un des segments 1204a-c qui forme la liaison pivot associée.

Un tel agencement peut également être mis en place dans le cadre du premier mode de réalisation de l'invention, à savoir celui représenté sur les Figs. 1 à 5.

Bien entendu, la présente invention n'est pas limitée aux exemples et modes de réalisation décrits et représentés, mais elle est susceptible de nombreuses variantes accessibles à l'homme de l'art.

Par exemple, les moyens d'actionnement peuvent être des moteurs rotatifs montés au niveau des axes de rotation correspondants.

## Revendications

1. Navire (50, 51) comprenant un dispositif de nettoyage (60) et un dispositif de guidage (100, 600) d'objets flottants tels que des hydrocarbures, le dispositif de guidage (100, 600) étant monté sur le navire (50, 51) et comportant :
- deux rampes (102a, 102b, 602a, 602b, 1202) flottantes distantes l'une de l'autre, et
- pour chaque rampe (102a, 102b, 602a, 602b, 1202), un dispositif de manoeuvre (150a, 150b, 650a, 650b) monté sur la coque du navire (50, 51), et sur lequel est montée ladite rampe (102a, 102b, 602a, 602b, 1202), et qui est destiné à faire passer ladite rampe (102a, 102b, 602a, 602b, 1202) d'une position de rangement dans laquelle ladite rampe (102a, 102b, 602a, 602b, 1202) est rangée sur le navire (50, 51), à une position intermédiaire dans laquelle ladite rampe (102a, 102b, 602a, 602b, 1202) est fixe devant le navire (50, 51) et maintenue au-dessus de l'eau, et à une position de récupération dans laquelle ladite rampe (102a, 102b, 602a, 602b, 1202) flotte dans l'eau en amont du navire (50, 51) de manière à guider les objets flottants vers ledit dispositif de nettoyage (60), les deux rampes (102a, 102b, 602a, 602b, 1202) s'écartant l'une de l'autre en progressant depuis l'arrière des rampes (102a, 102b, 602a, 602b, 1202) vers l'avant des rampes (102a, 102b, 602a, 602b, 1202) dans la position de récupération.

2. Navire (50, 51) selon la revendication 1, **caractérisé en ce que** chaque rampe (102, 102b, 602a, 602b, 1202) est libre en rotation par rapport audit dispositif de manoeuvre (150a, 150b, 650a, 650b) autour d'un axe de plongée (104, 604).

3. Navire (50) selon la revendication 2, **caractérisé en ce que** chaque dispositif de manoeuvre (150a, 150b) comporte:
- un bras de levage (152) monté sur la coque du navire (50) et libre en rotation autour d'un premier axe de rotation (160) parallèle à l'axe de plongée (104), le bras de levage (152) venant en position de rangement se placer contre la face supérieure de la rampe (102a, 102b) correspondante,
- un bras de blocage (154) monté sur ledit bras de levage (152) et libre en rotation autour d'un deuxième axe de rotation (162) parallèle à l'axe de plongée (104), le bras de blocage (154) venant en position de rangement se placer contre la face inférieure de la rampe (102a, 102b) correspondante, la rampe (102a, 102b) correspondante étant montée libre en rotation sur ledit bras de blocage (154),
- un premier moyen d'actionnement (156) destiné à entraîner en rotation ledit bras de levage (152),
- un deuxième moyen d'actionnement (158) destiné à entraîner en rotation le bras de blocage (154), et
- une unité de commande destinée à commander chaque moyen d'actionnement (156, 158).

4. Navire (50) selon la revendication 3, **caractérisé en ce qu'**il comporte, pour chaque bras de blocage (154), un moyen de verrouillage (172) destiné à verrouiller ledit bras de blocage (154) au navire (50) lorsque la rampe (102a, 102b) correspondante est en position de récupération.

5. Navire (51) selon la revendication 2, **caractérisé en ce que** chaque dispositif de manoeuvre (650a, 650b) comporte:
- un bras de levier (652) monté sur la coque du navire (51) et libre en rotation autour d'un premier axe de rotation (660) parallèle à l'axe de plongée (604), la rampe (602a, 602b) correspondante étant montée libre en rotation sur ledit bras de levier (652),
- un premier moyen d'actionnement (656) destiné à entraîner en rotation ledit bras de levier (652),
- un deuxième moyen d'actionnement (658) destiné à entraîner en rotation la rampe (602a, 602b) correspondante, et
- une unité de commande destinée à commander chaque moyen d'actionnement (656, 658).

6. Navire (51) selon la revendication 5, **caractérisé en ce que**, pour chaque bras de levier (652), il comporte un moyen de verrouillage (672) destiné à verrouiller ledit bras de levier (652) au navire (51) lorsque la rampe (602a, 602b) correspondante est en position de récupération.

7. Navire (50, 51) selon l'une des revendications 1 à 6, **caractérisé en ce que** chaque rampe (102a, 102b, 602a, 602b, 1202) est un élément rigide.

8. Navire (50, 51) selon la revendication 7, **caractérisé en ce que** chaque rampe (1202) est constituée d'une pluralité de segments rigides (1204a-c), chacun étant relié à son/ses voisins par une/deux liaisons pivot autour d'un axe parallèle à l'axe de plongée, et par un moyen de blocage qui est laissé libre afin d'assurer le mouvement de chaque segment (1204a-c) et qui est bloqué pour bloquer la liaison pivot correspondante.

9. Navire (50, 51) selon l'une des revendications 1 à 8, **caractérisé en ce qu'**en position de récupération, la ligne de flottaison de chaque rampe (102a, 102b, 602a, 602b, 1202) se situe à mi-hauteur de ladite rampe (102a, 102b, 602a, 602b, 1202).

10. Navire (50, 51) selon l'une des revendications 1 à 9, **caractérisé en ce qu'**un actionneur d'écartement (1104) est disposé entre les deux rampes (1102a, 1102b).

11. Navire (50, 51) selon l'une des revendications 1 à 9, **caractérisé en ce que** les deux rampes (102a, 102b, 602a, 602b) forment ensemble un élément monobloc.

12. Navire (50, 51) selon l'une des revendications 1 à 11, **caractérisé en ce que** dans la position de rangement, les deux rampes (102a, 102b, 602a, 602b, 1202) sont déposées sur le pont (52) du navire (50, 51).

13. Navire (50, 51) selon l'une des revendications 1 à 11, **caractérisé en ce que** dans la position de rangement, les deux rampes (102a, 102b, 602a, 602b, 1202) sont stockées le long des bordés du navire (50, 51).

14. Dispositif de guidage (100, 600) d'objets flottants tels que des hydrocarbures pour un navire (50, 51) selon l'une des revendications précédentes.

## Patentansprüche

1. Schiff (50, 51), das eine Reinigungsvorrichtung (60) und eine Führungsvorrichtung (100, 600) für schwimmende Objekte wie Kohlenwasserstoffe enthält, wobei die Führungsvorrichtung (100,600) an dem Schiff (50, 51) montiert ist und aufweist:
- zwei voneinander entfernte, schwimmende Rampen (102a, 102b, 602a, 602b, 1202) und
- für jede Rampe (102a, 102b, 602a, 602b, 1202) eine an dem Rumpf des Schiffs (50, 51) montierte Manövriervorrichtung (150a, 150b, 650a, 650b), an der die Rampe (102a, 102b, 602a, 602b, 1202) montiert ist und die dazu bestimmt ist, die Rampe (102a, 102b, 602a, 602b, 1202) von einer Verstaustellung, in der die Rampe (102a, 102b, 602a, 602b, 1202) auf dem Schiff (50, 51) verstaut ist, in eine Zwischenstellung, in der die Rampe (102a, 102b, 602a, 602b, 1202) vor dem Schiff (50, 51) befestigt ist und über dem Wasser gehalten wird, und in eine Rückgewinnungsstellung übergehen zu lassen, in der die Rampe (102a, 102b, 602a, 602b, 1202) im Wasser vor dem Schiff (50, 51) schwimmt, um die schwimmenden Objekte zur Reinigungsvorrichtung (60) zu führen, wobei die zwei Rampen (102a, 102b, 602a, 602b, 1202) sich in der Rückgewinnungsstellung von der Rückseite der Rampen (102a, 102b, 602a, 602b, 1202) zur Vorderseite der Rampen (102a, 102b, 602a, 602b, 1202) zunehmend voneinander entfernen.

2. Schiff (50, 51) nach Anspruch 1, **dadurch gekennzeichnet, dass** jede Rampe (102, 102b, 602a, 602b, 1202) bezüglich der Manövriervorrichtung (150a, 150b, 650a, 650b) um eine Tauchachse (104, 604) frei drehbar ist.

3. Schiff (50) nach Anspruch 2, **dadurch gekennzeichnet, dass** jede Manövriervorrichtung (150a, 150b) aufweist:
- einen Hubarm (152), der an dem Rumpf des Schiffs (50) montiert und um eine erste Drehachse (160) parallel zur Tauchachse (104) frei drehbar ist, wobei der Hubarm (152) sich in der Verstaustellung gegen die Oberseite der entsprechenden Rampe (102a, 102b) legt,
- einen Blockierarm (154), der an dem Hubarm (152) montiert und um eine zweite Drehachse (162) parallel zur Tauchachse (104) frei drehbar ist, wobei der Blockierarm (154) sich in der Verstaustellung gegen die Unterseite der entsprechenden Rampe (102a, 102b) legt, wobei die entsprechende Rampe (102a, 102b) frei drehbar an dem Blockierarm (154) montiert ist,
- eine erste Betätigungseinrichtung (156), die dazu bestimmt ist, den Hubarm (152) in Drehung zu versetzen,
- eine zweite Betätigungseinrichtung (158), die dazu bestimmt ist, den Blockierarm (154) in Drehung zu versetzen, und
- eine Steuereinheit, die dazu bestimmt ist, jede Betätigungseinrichtung (156, 158) zu steuern.

4. Schiff (50) nach Anspruch 3, **dadurch gekennzeichnet, dass** es für jeden Blockierarm (154) eine Verriegelungseinrichtung (172) aufweist, die dazu bestimmt ist, den Blockierarm (154) am Schiff (50) zu verriegeln, wenn die entsprechende Rampe (102a, 102b) in der Rückgewinnungsstellung ist.

5. Schiff (51) nach Anspruch 2, **dadurch gekennzeichnet, dass** jede Manövriervorrichtung (650a, 650b) aufweist:
- einen Hebelarm (652), der an dem Rumpf des Schiffs (51) montiert und um eine erste Drehachse (660) parallel zur Tauchachse (604) frei drehbar ist, wobei die entsprechende Rampe (602a, 602b) frei drehbar an dem Hebelarm (652) montiert ist,
- eine erste Betätigungseinrichtung (656), die dazu bestimmt ist, den Hebelarm (652) in Drehung zu versetzen,
- eine zweite Betätigungseinrichtung (658), die dazu bestimmt ist, die entsprechende Rampe (602a, 602b) in Drehung zu versetzen, und
- eine Steuereinheit, die dazu bestimmt ist, jede Betätigungseinrichtung (656, 658) zu steuern.

6. Schiff (51) nach Anspruch 5, **dadurch gekennzeichnet, dass** es für jeden Hebelarm (652) eine Verriegelungseinrichtung (672) aufweist, die dazu bestimmt ist, den Hebelarm (652) am Schiff (51) zu verriegeln, wenn die entsprechende Rampe (602a, 602b) in der Rückgewinnungsstellung ist.

7. Schiff (50, 51) nach einem der Ansprüche 1 bis 6, **dadurch gekennzeichnet, dass** jede Rampe (102a, 102b, 602a, 602b, 1202) ein starres Element ist.

8. Schiff (50, 51) nach Anspruch 7, **dadurch gekennzeichnet, dass** jede Rampe (1202) aus einer Vielzahl von starren Segmenten (1204a-c), die jeweils mit ihrem/ihren Nachbarn über eine/zwei Drehzapfenverbindung(en) um eine Achse parallel zur Tauchachse verbunden sind, und aus einer Blockiereinrichtung besteht, die freigelassen wird, um die Bewegung jedes Segments (1204a-c) zu gewährleisten, und die blockiert wird, um die entsprechende Drehzapfenverbindung zu blockieren.

9. Schiff (50, 51) nach einem der Ansprüche 1 bis 8, **dadurch gekennzeichnet, dass** die Wasserlinie jeder Rampe (102a, 102b, 602a, 602b, 1202) sich in der Rückgewinnungsstellung auf halber Höhe der Rampe (102a, 102b, 602a, 602b, 1202) befindet.

10. Schiff (50, 51) nach einem der Ansprüche 1 bis 9, **dadurch gekennzeichnet, dass** ein Abstands-Stellantrieb (1104) zwischen den zwei Rampen (1102a, 1102b) angeordnet ist.

11. Schiff (50,51) nach einem der Ansprüche 1 bis 9, **dadurch gekennzeichnet, dass** die zwei Rampen (102a, 102b, 602a, 602b) zusammen ein einstückiges Element formen.

12. Schiff (50, 51) nach einem der Ansprüche 1 bis 11, **dadurch gekennzeichnet, dass** die zwei Rampen (102a, 102b, 602a, 602b, 1202) in der Verstaustellung auf dem Deck (52) des Schiffs (50, 51) abgelegt werden.

13. Schiff (50, 51) nach einem der Ansprüche 1 bis 11, **dadurch gekennzeichnet, dass** die zwei Rampen (102a, 102b, 602a, 602b, 1202) in der Verstaustellung entlang der Beplankungen des Schiffs (50, 51) gelagert werden.

14. Führungsvorrichtung (100, 600) von schwimmenden Objekten wie Kohlenwasserstoffen für ein Schiff (50, 51) nach einem der vorhergehenden Ansprüche.

## Claims

1. A ship (50, 51) including a cleaning device (60) and a device (100, 600) for guiding floating objects, such as hydrocarbons, the guiding device (100, 600) being mounted on the ship (50, 51) and comprising:
- two floating rails (102a, 102b, 602a, 602b, 1202) spaced apart from one another, and
- for each rail (102a, 102b, 602a, 602b, 1202), a control device (150a, 150b, 650a, 650b) mounted on the hull of the ship (50, 51), and on which said rail (102a, 102b, 602a, 602b, 1202) is mounted, and which is designed to move said rail (102a, 102b, 602a, 602b, 1202) from a stowed position in which said rail (102a, 102b, 602a, 602b, 1202) is stowed on the ship (50, 51), to an intermediate position in which said rail (102a, 102b, 602a, 602b, 1202) is stationary in front of the vessel (50, 51) and held above the water, and to a recovery position in which said rail (102a, 102b, 602a, 602b, 1202) floats in the water upstream of the ship (50, 51) so as to guide the floating objects toward said cleaning device (60), the two rails (102a, 102b, 602a, 602b, 1202) spreading apart when proceeding from the rear of the rails (102a, 102b, 602a, 602b, 1202) toward the front of the rails (102a, 102b, 602a, 602b, 1202) in the recovery position.

2. The ship (50, 51) according to claim 1, **characterised in that** each rail (102, 102b, 602a, 602b, 1202) is free in rotation relative to said control device (150a, 150b, 650a, 650b) about an immersion axis (104, 604).

3. The ship (50) according to claim 2, **characterised in that** each control device (150a, 150b) includes:
- a lifting arm (152) mounted on the hull of the ship (50) and free in rotation about a first axis of rotation (160) parallel to the immersion axis (104), the lifting arm (152) when in the stowed position being placed against the upper face of the corresponding rail (102a, 102b),
- a locking arm (154) mounted on said lifting arm (152) and free in rotation about a second axis of rotation (162) parallel to the immersion axis (104), the locking arm (154) when in the stowed position being placed against the lower face of the corresponding rail (102a, 102b), the corresponding rail (102a, 102b) being mounted free in rotation on said locking arm (154),
- a first actuating means (156) designed to drive said lifting arm (152) in rotation,
- a second actuating means (158) designed to drive said locking arm (154) in rotation, and
- a control unit designed to control each actuating means (156, 158).

4. The ship (50) according to claim 3, **characterised in that** it includes, for each locking arm (154), a locking means (172) designed to lock said locking arm (154) to the ship (50) when the corresponding rail (102a, 102b) is in the recovery position.

5. The ship (51) according to claim 2, **characterised in that** each control device (650a, 650b) includes:
- a lever arm (652) mounted on the hull of the ship (51) and free in rotation about a first axis of rotation (660) parallel to the immersion axis (604), the corresponding rail (602a, 602b) being mounted free in rotation on said lever arm (652),
- a first actuating means (656) designed to drive said lever arm (652) in rotation,
- a second actuating means (658) designed to drive the corresponding rail (602a, 602b) in rotation, and
- a control unit designed to control each actuating means (656, 658).

6. The ship (51) according to claim 5, **characterised in that**, for each lever arm (652), it includes a locking means (672) designed to lock said lever arm (652) to the ship (51) when the corresponding rail (602a, 602b) is in the recovery position.

7. The ship (50, 51) according to any one of claims 1 to 6, **characterised in that** each rail (102a, 102b, 602a, 602b, 1202) is a rigid element.

8. The ship (50, 51) according to claim 7, **characterised in that** each rail (1202) is made up of a plurality of rigid segments (1204a-c), each being connected to its neighbour(s) by one/two pivot connections about an axis parallel to the immersion axis, and by a locking means which is left free so as to facilitate the movement of each segment (1204a-c) and which is locked so as to lock the corresponding pivot connection.

9. The ship (50, 51) according to any one of claims 1 to 8, **characterised in that** in the recovery position, the waterline of each rail (102a, 102b, 602a, 602b, 1202) is located at mid-height of said rail (102a, 102b, 602a, 602b, 1202).

10. The ship (50, 51) according to any one of claims 1 to 9, **characterised in that** a spreading actuator (1104) is disposed between the two rails (1102a, 1102b).

11. The ship (50, 51) according to one of claims 1 to 9, **characterised in that** the two rails (102a, 102b, 602a, 602b) together form a one piece assembly element.

12. The ship (50, 51) according to any one of claims 1 to 11, **characterised in that** in the stowed position, the two rails (102a, 102b, 602a, 602b, 1202) are laid on the deck (52) of the ship (50, 51).

13. The ship (50, 51) according to any one of claims 1 to 11, **characterised in that** in the stowed position, the two rails (102a, 102b, 602a, 602b, 1202) are stowed along the sides of the ship (50, 51).

14. A device (100, 600) for guiding floating objects, such as hydrocarbons, for a ship (50, 51) according to any one of the preceding claims.
